# EUROPÄISCHE PATENTANMELDUNG

(11) **EP 1 734 292 A1**
(43) Veröffentlichungstag der Anmeldung: **20.12.2006**
(21) Anmeldenummer: 05012663.0
(22) Anmeldetag: 13.06.2005
(51) Int. Cl.: F16J 15/16, F16J 15/40, F16J 15/44, F01D 11/02

(54) **Dichtungsmittel für eine Strömungsmaschine**

(71) Anmelder: SIEMENS AKTIENGESELLSCHAFT, 80333 München (DE)
(72) Erfinder: Diesler, Martin, 45527 Hattingen (DE); Hoffstadt, Uwe, 45468 Mülheim an der Ruhr (DE); Peterson, Martin, 45473 Mülheim an der Ruhr (DE)

(57) **Zusammenfassung**

Die Erfindung betrifft eine Dichtungsanordnung (20) für eine Strömungsmaschine (1). Statt der üblichen Labyrinthdichtungen oder Bürstendichtungen werden hier Dichtungsmittel (19) angeordnet, die derart ausgebildet sind, dass diese Dichtmittel (19) wie Verdichterschaufeln (24) wirken, indem sie starr ausgebildet sind und zu einer Leckageströmung geneigt auf einer Oberfläche (17) eines Rotors (3) oder eines Innengehäuses (2) angeordnet werden.

## Beschreibung

Die Erfindung betrifft eine strömungstechnische Komponente mit auf einer Oberfläche der strömungstechnischen Komponente angeordnetem Dichtungsmittel, wobei im Betrieb der strömungstechnischen Komponente ein Leckfluid entlang der Oberfläche einer Leckageströmungsrichtung strömt.
Die Erfindung betrifft des weiteren eine Strömungsmaschine mit einer strömungstechnischen Komponente sowie ein Verfahren zur Herstellung einer strömungstechnischen Komponente mit einer Oberfläche und mit einem Dichtmittel, das derart angeordnet wird, dass ein im Betrieb der strömungstechnischen Komponente entlang einer Leckageströmungsrichtung strömendes Leckfluid im wesentlichen senkrecht zum Dichtmittel verläuft.

Wie bei thermischen Strömungsmaschinen üblich werden Wellendichtungen sowie innere Dichtstellen der Maschinen mittels Labyrinthen abgedichtet. Unter der Sammelbezeichnung Strömungsmaschinen werden Wasserturbinen, Dampf- und Gasturbinen, Windräder, Kreiselpumpen und Kreiselverdichter wie Propeller zusammengefasst. Allen diesen Maschinen ist gemeinsam, dass sie dem Zweck dienen, einem Fluid Energie zu entziehen, um damit eine andere Maschine anzutreiben oder umgekehrt einem Fluid Energie zuzuführen, um dessen Druck zu erhöhen.

Labyrinthdichtungen sind berührungsfreie Dichtungen, die folgendermaßen aufgebaut sind und folgendermaßen wirken: ein Spaltstrom, den diese Dichtungen stets durchtreten lassen, wird klein gehalten, indem der Dampf unter Druckabsenkung in engen Spalten beschleunigt und die erreichte kinetische Energie in den anschließenden Ringräumen verwirbelt wird. Dichtungen dieser Art werden auch an den Wellendurchführungen durch die Zwischenböden der Kammerturbinen und an den Deckbändern der Beschaufelungen sowie an den Schubausgleichskolben der Trommelturbinen verwendet.

Die Dichtungsspitzen können aus dem Vollen gedreht oder durch dünne Blechstege gebildet sein, die in das Grundmaterial eingestemmt sind. In jedem Fall müssen die Stege sehr dünn sein, etwa 0,2 bis 0,3mm, damit sie sich bei einem eventuellen Anstreifen gefahrlos abschleifen können, ohne dass die Reibungswärme im Grundmaterial oder auf der Gegenseite unzulässig hohe Temperaturen erzeugt. Die Spitzen können auf der Wellen- oder auf der Gehäuseseite angeordnet sein. Sitzen die Spitzen auf der Welle, so bringt man sie oft zu deren Schutz vor Verzug durch einseitige Erwärmung auf einer Schonbüchse an. Nach einem Anstreifen tritt nämlich an der beschädigten Stelle ein vermehrter Durchfluss auf und, da die schadhafte Stelle mit der Welle umläuft, wird diese einseitig aufgewärmt.

Das radiale Spiel soll wegen der Leckverluste klein sein, muss aber groß genug sein, um ein Anlaufen zu verhindern.

Je nach herrschendem Innendruck ist eine Vielzahl von Labyrinthen erforderlich, was dazu führt, dass eine Turbine in ihrer Längsrichtung größer ausgebildet werden muss. Bei einer Hochdruck-Dampfturbine können das bis zu mehrere hundert Millimeter sein. Solch eine Turbine führt zu einem erhöhten Platzbedarf.

Außer den Labyrinthdichtungen gibt es so genannte Bürstendichtungen, die aus dünnen metallischen Blechen bestehen. Solche Bürstendichtungen sind z. B. in der DE 100 06 298 beschrieben.

In der EP 1 254 331 wird eine weitere Dichtungsmöglichkeit vorgestellt, bei der die Dichtelemente aus einem Faltenband gebildet sind. Dadurch, dass mehrere Lamellen aus einem Faltenband gebildet werden, gibt es keinen Spalt mehr zwischen den Dichtelementen, so dass sich die Dichtwirkung der erfindungsgemäßen Rotordichtung gegenüber bekannten Lamellendichtungen deutlich erhöht.

In der US 5,135,237 wird ebenfalls eine Dichtungsanordnung beschrieben, die allerdings nicht zu den berührungsfreien Dichtungen gehört.

Aufgabe der Erfindung ist es, eine Dichtungsanordnung anzugeben, mit der kurze Bauformen möglich sind.
Eine weitere Aufgabe der Erfindung besteht darin, ein Verfahren zur Herstellung einer strömungstechnischen Komponente anzugeben.

Die auf die Dichtungsanordnung hin gerichtete Aufgabe wird bei einer strömungstechnischen Komponente mit einem auf einer Oberfläche der strömungstechnischen Komponente angeordneten Dichtungsmittel, wobei im Betrieb der strömungstechnischen Komponente ein Leckfluid entlang der Oberfläche in einer Leckageströmung strömt, dadurch gelöst, dass das Dichtmittel starr ausgebildete und zur Leckageströmungsrichtung geneigte Dichtschaufeln aufweist.

Die Dichtung erfolgt demnach nicht durch, wie bisher geschehen, Dichtbänder, die ringförmig um den Kolben angeordnet sind und dadurch eine Labyrinthdichtung darstellen, sondern durch einzelne Dichtschaufeln, was zu einer Art Verdichter-Beschaufelung auf der Oberfläche führt.

Mögliche Einsatzgebiete der erfindungsgemäßen Dichtung sind Turbomaschinen wie Dampfturbinen, Gasturbinen, Verdichter. Die Anwendung der erfindungsgemäßen Dichtung ist jedoch nicht auf die genannten Anwendungsgebiete beschränkt.

Die Erfindung geht davon aus, dass ein Leckfluid, das entlang der Oberfläche einer strömungstechnischen Komponente strömt, durch die Dichtschaufeln, die zur Leckageströmungsrichtung geneigt sind, wie eine Art Verdichter wirken und dadurch die Leckströmung abbremst.

Durch solch eine Dichtungsanordnung, bei der auf der Oberfläche der strömungstechnischen Komponente verteilte geneigte Dichtschaufeln angeordnet werden, kann die Baulänge erheblich verkürzt werden, da der Druckabfall über die geneigten Dichtschaufeln größer ist als bei Labyrinthdichtungen. Dadurch entsteht ein Kostenvorteil.

In einer vorteilhaften Weiterbildung sind die Dichtschaufeln im wesentlichen senkrecht zur Oberfläche ausgebildet. In der Regel strömt das Leckfluid parallel entlang zur Oberfläche. Durch eine im wesentlichen senkrechte Anordnung der Dichtschaufeln wird diese Leckageströmung effektiv durch die Dichtschaufeln beeinflusst.

In einer vorteilhaften Weiterbildung sind die Dichtschaufeln gebogen. Ein Merkmal der Erfindung ist dann, dass die Leckageströmung durch Dichtschaufeln an der Oberfläche an der strömungstechnischen Komponente verdichtet und dadurch abgebremst wird. Da die Dichtwirkung durch gebogene Dichtschaufeln verbessert wird, ist die Dichtungsanordnung mit gebogenen Dichtschaufeln besonders wirksam.

In einer vorteilhaften Weiterbildung sind die Dichtschaufeln im wesentlichen parallel zueinander angeordnet. Das Leckfluid strömt in der Regel auf der Oberfläche verteilt in Richtung der Dichtungsanordnung, die durch die geneigten Dichtschaufeln gebildet wird, zu. Das Leckfluid ist hierbei im Wesentlichen gleichmäßig auf der Oberfläche verteilt, so dass pro Dichtschaufel jeweils ungefähr ein gleicher Massenstrom ankommt. Durch eine parallele Anordnung der Dichtschaufeln wird der Massenstrom von Dichtschaufel zu Dichtschaufel jeweils gleich beeinflusst. Dadurch wird eine gleichmäßig über die Dichtschaufeln wirkende Dichtung bewirkt.

In einer weiteren vorteilhaften Weiterbildung der Erfindung ist die Oberfläche rotationssymmetrisch ausgebildet. Die Erfindung findet ihr Haupteinsatzgebiet in Strömungsmaschinen, die rotationssymmetrisch ausgebildet sind. In rotationssymmetrischen Strömungsmaschinen, wie z. B. Dampfturbinen, bewegt sich ein Leckfluid auf der Oberfläche rotationssymmetrisch verteilt auf eine Dichtungsanordnung zu. Das Leckfluid wird durch die erfindungsgemäßen geneigten Dichtschaufeln abgebremst, so dass ein sehr geringer Massenstrom durch die Dichtungsanordnung strömen kann.

In einer weiteren vorteilhaften Weiterbildung ist die strömungstechnische Komponente als Innengehäuse oder als Rotor ausgebildet. Schließlich findet die Erfindung bei Strömungsmaschinen mit einer strömungstechnischen Komponente, die als Rotor ausgebildet ist und einer strömungstechnischen Komponente, die als Innengehäuse ausgebildet ist, ein Hauptanwendungsgebiet.

Vorteilhafterweise können die Dichtschaufeln bei dieser Strömungsmaschine auf der Oberfläche in der Leckageströmung hintereinander angeordnet sein. Eine verbesserte Dichtwirkung wird auch erreicht, indem die Dichtschaufeln in dieser Strömungsmaschine, die auf dem Rotor angeordnet sind, gegenüber den Dichtschaufeln, die auf dem Innengehäuse angeordnet sind, angeordnet werden.

Die auf das Verfahren hin gerichtete Aufgabe wird gelöst durch ein Verfahren zur Herstellung einer strömungstechnischen Komponente mit einer Oberfläche und mit einem Dichtmittel, das derart angeordnet wird, dass ein im Betrieb der strömungstechnischen Komponente entlang einer Leckageströmungsrichtung strömendes Leckfluid im wesentlichen senkrecht zum Dichtmittel verläuft, wobei das Dichtmittel in Form einer Dichtschaufel auf der Oberfläche angeordnet wird und aus einem starren Material gefertigt wird und zur Leckageströmung im wesentlichen geneigt angeordnet wird. Die Vorteile beim Verfahren ergeben sich entsprechend den bei der Vorrichtung genannten Vorteilen.

Nachfolgend wird ein Ausführungsbeispiel der Erfindung anhand der beigefügten schematischen Zeichnungen näher erläutert.

Es zeigen
- Figur 1: einen Querschnitt einer Dampfturbine, die zum Stand der Technik gehört;
- Figur 2: Schnittdarstellung einer Leit- und Laufschaufel, die zum Stand der Technik gehören;
- Figur 3: eine im Querschnitt dargestellte Labyrinthdichtung, die zum Stand der Technik gehört;
- Figur 4: eine Seitenansicht eines Rotors mit einem Ausgleichskolben und Dichtspitzen, die zum Stand der Technik gehören;
- Figur 5: einen mit Dichtspitzen versehenen Rotor, der zum Stand der Technik gehört;
- Figur 6: eine perspektivische Darstellung eines Rotors und eines Teiles eines Innengehäuses mit Dichtschaufeln;
- Figur 7: eine Seitenansicht der erfindungsgemäßen Anordnung;
- Figur 8: eine Seitenansicht einer alternativen Ausführungsform der Dichtungsanordnung;
- Figur 9: eine Seitenansicht einer alternativen Ausführungsform der Dichtungsanordnung;
- Figur 10: eine Seitenansicht des in Figur 9 dargestellten Rotors;
- Figur 11: eine Seitenansicht des in Figur 9 dargestellten Innengehäuses.

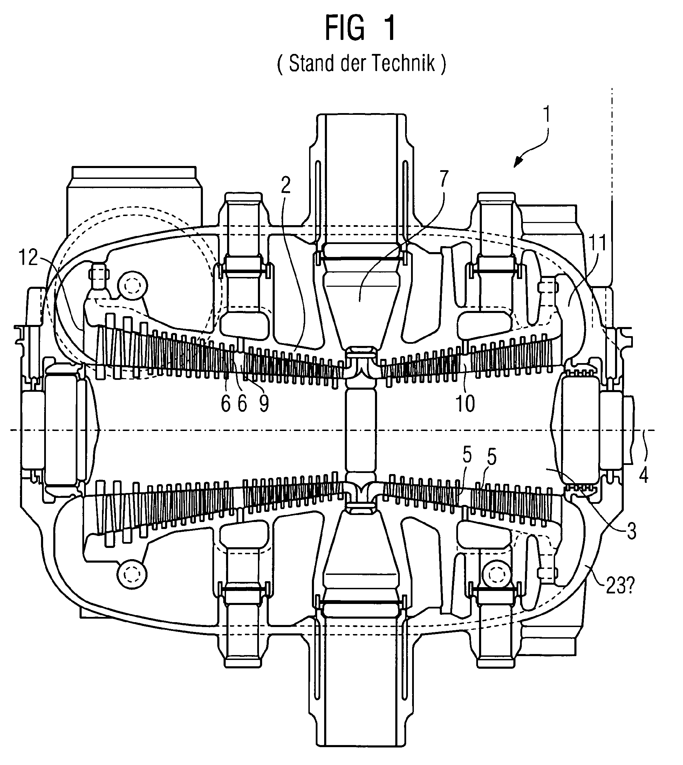

In Figur 1 ist eine Dampfturbine 1 als Ausführungsform einer Strömungsmaschine dargestellt. Die Dampfturbine 1 weist ein Innengehäuse 2 auf, das als strömungstechnische Komponente 2 aufgefasst werden kann. Die Dampfturbine 1 weist des Weiteren einen Rotor 3 auf, der ebenfalls als eine strömungstechnische Komponente 3 aufgefasst werden kann. Der Rotor 3 ist um eine Rotationsachse 4 drehbar gelagert. Der Rotor 3 weist mehrere Laufschaufeln 5 auf. Der Übersichtlichkeit wegen sind in der Figur 1 lediglich zwei Laufschaufeln mit dem Bezugszeichen 5 versehen.

Am Innengehäuse 2 sind mehrere Leitschaufeln 6 angeordnet. Der Übersichtlichkeit wegen sind lediglich zwei Leitschaufeln mit dem Bezugszeichen 6 versehen. Über eine Eintrittsöffnung 7 strömt Dampf in die Dampfturbine und teilt sich in zwei Teildampfströmungen auf. Ein Teildampfstrom bewegt sich durch einen Strömungskanal 9 und der andere Teildampfstrom strömt durch einen zweiten Strömungskanal 10. Nach Durchtritt der Strömungskanale 9 und 10 strömen die Teildampfströme über Ausgangsöffnungen 11 bzw. 12 aus der Dampfturbine heraus. Um das Innengehäuse ist ein Außengehäuse 23 angeordnet. An dem Außengehäuse 23 wird das Innengehäuse 2 angebracht. Die Energie des Dampfes wird in Rotationsenergie umgewandelt, die dazu führt, dass der Rotor 3 eine Drehbewegung um die Rotationsachse 4 ausführt.

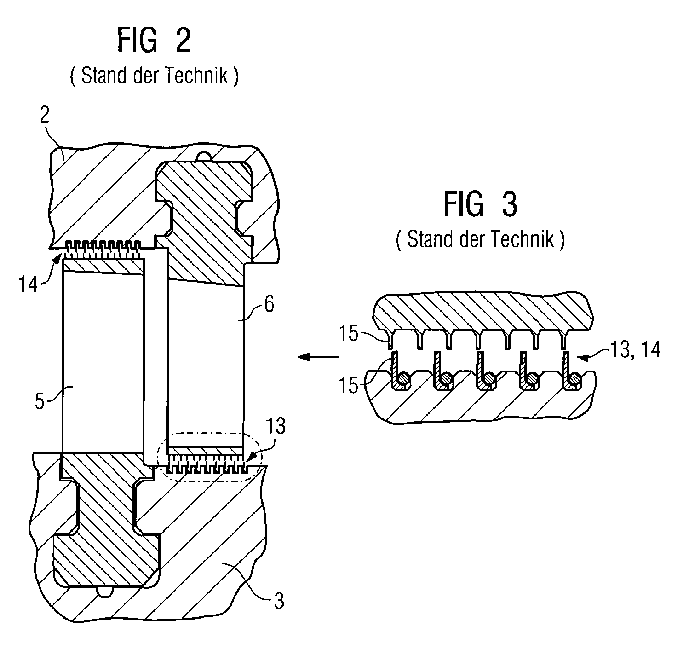

In der Figur 2 ist ein Teil des Rotors 3 aus der Figur 1 dargestellt. Ebenso sind eine Laufschaufel 5 und eine Leitschaufel 6 dargestellt. Der Dampf strömt von rechts nach links zunächst an der Leitschaufel 6 und dann an der Laufschaufel 5 vorbei. Zwischen der Leitschaufel 6 und dem Rotor ist fertigungsbedingt ein Spalt 13 vorhanden. Ebenso ist zwischen der Laufschaufel 5 und dem Innengehäuse 2 ein Spalt 14 vorhanden. Durch diese Spalte 13, 14 strömen zum Teil nicht unerhebliche Leckfluide, die den Wirkungsgrad einer Strömungsmaschine vermindern.

In der in Figur 2 dargestellten Anordnung, die zum Stand der Technik gehört, werden die Spalte 13 und 14 durch die so genannten Labyrinthdichtungen abgedichtet.

In der Figur 3 ist der Spalt 13 bzw. 14 vergrößert dargestellt. Die Labyrinthdichtung gemäß Figur 3 weist mehrere Dichtspitzen 15 auf, die auf beiden strömungstechnischen Komponenten 5, 6 bzw. 2, 3 angeordnet sind. Der Übersichtlichkeit wegen sind in der Figur 3 lediglich zwei Dichtspitzen 15 mit dem Bezugszeichen 15 versehen. Die Dichtspitzen 15 werden in der Regel rotationssymmetrisch eingebaut und möglichst fest in das Innengehäuse 2 bzw. in den Rotor 3 eingestemmt.

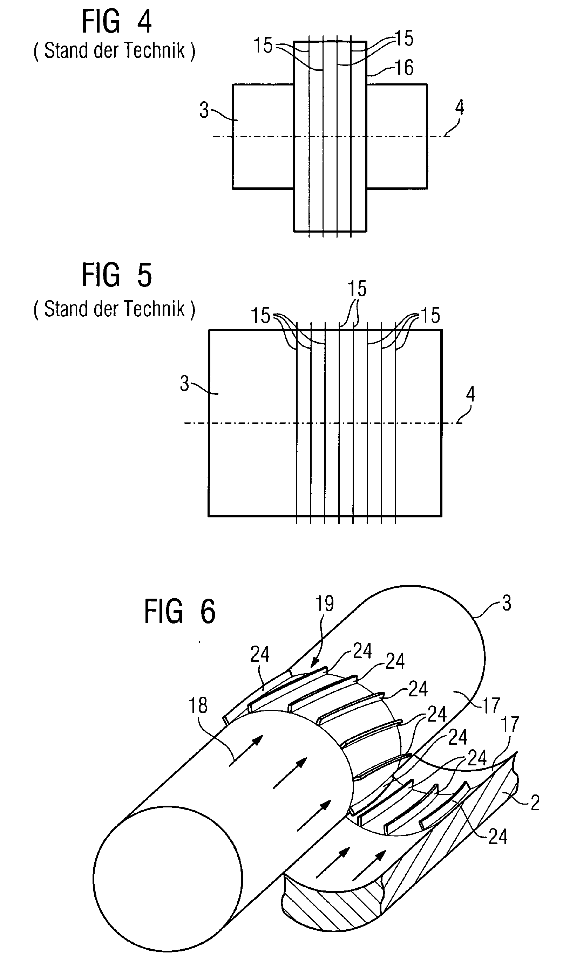

In der Figur 4 ist eine Seitenansicht eines Rotors 3 und eines Kolbens 16 dargestellt. Der Kolben 16 dient bei einer besonderen Ausführungsform einer Dampfturbine 1 zu einem Schubausgleich des Rotors 3, der durch eine besondere Art der Beschaufelung 5, 6 herrührt. Der Rotor 3 mit dem Kolben 16 ist rotationssymmetrisch bezüglich der Rotationsachse 4 ausgebildet. Der Rotor 3 als auch der Kolben 16 können als strömungstechnische Komponenten aufgefasst werden. Die Dichtspitzen 15 sind, wie in der Figur 4 dargestellt, durchgehende rotationssymmetrische Bänder, die in den Kolben 16 eingestemmt sind.

In der Figur 5 ist eine Seitenansicht des Rotors 3 ohne einen Ausgleichskolben 16 dargestellt. Die Dichtspitzen 15 sind hier ebenso rotationssymmetrisch um die Rotationsachse 4 ausgebildet und in den Rotor 3 eingestemmt.

Die Figuren 1 bis 5 zeigen den Stand der Technik.

In der Figur 6 ist der Rotor 3, der als strömungstechnische Komponente angesehen werden kann, dargestellt. Der Rotor 3 weist eine Oberfläche 17 auf. Auf dieser Oberfläche strömt im Betrieb des Rotors 3 ein Leckfluid auf der Oberfläche 17 entlang einer Leckageströmungsrichtung 18. Der Übersichtlichkeit wegen ist in der Figur 6 lediglich eine Leckageströmungsrichtung mit dem Bezugszeichen 18 versehen. Um den Rotor 3 ist ein Innengehäuse 2 angeordnet. Der Übersichtlichkeit wegen ist in der Figur 6 lediglich ein Teil des Innengehäuses 2 schematisch dargestellt. Statt der rotationssymmetrisch ausgebildeten Dichtspitzen 15 wird erfindungsgemäß ein Dichtmittel 19 in den Rotor 3 auf der Oberfläche 17 angeordnet. Das Dichtmittel 19 ist starr ausgebildet und zur Leckageströmungsrichtung 18 geneigt. Des Weiteren umfasst das Dichtmittel 19 eine Dichtschaufel 24. Diese Dichtschaufeln 24 sind auf dem Rotor bzw. auf dem Innengehäuse 2 angeordnet. Das Innengehäuse 2 kann ebenso als strömungstechnische Komponente 2 aufgefasst werden.

Die Dichtschaufeln 24 werden vorteilhafterweise im wesentlichen senkrecht zur Oberfläche 17 angeordnet. Ebenso können die Dichtschaufeln 24 vorteilhafterweise gebogen ausgebildet sein.

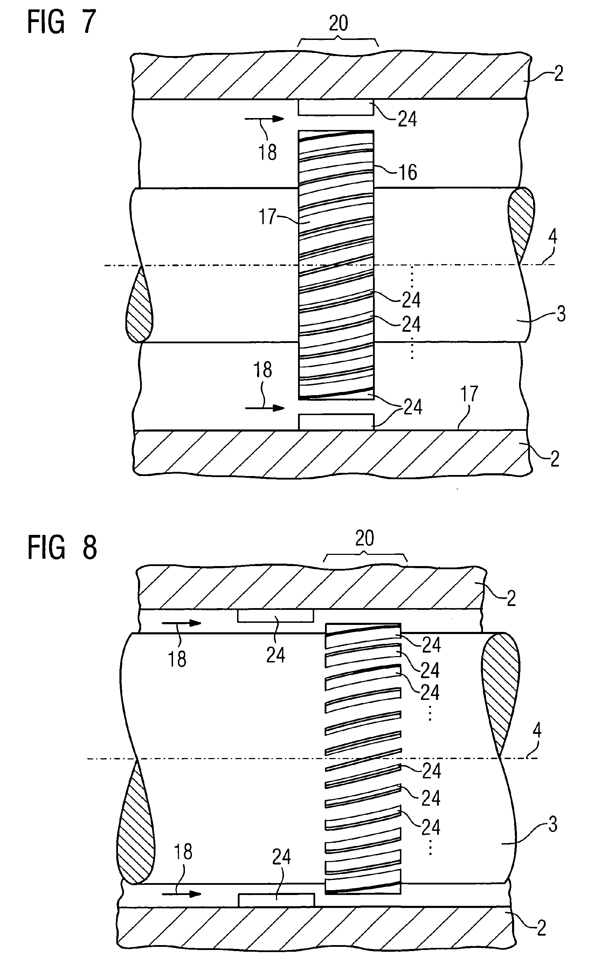

In der Figur 7 ist eine Seitenansicht einer Dichtungsanordnung 20 zu sehen. Der Rotor 3 ist um die Rotationsachse 4 rotationssymmetrisch angeordnet und weist einen Kolben 16 auf. Auf der Oberfläche 17 des Kolbens 16 sind mehrere Dichtschaufeln 24 angeordnet. Die Dichtschaufeln 24 sind im wesentlichen parallel zueinander angeordnet. Ebenso sind auf der Oberfläche 17 des Innengehäuses 2 Dichtschaufeln 24 gegenüberliegend den Dichtschaufeln 24, die an dem Kolben 16 angeordnet sind, angebracht.

Im Betrieb strömt ein Leckfluid entlang der Oberfläche 17 in Richtung Leckageströmung 18 und wird durch die verdichtende Wirkung der Dichtschaufeln 24 abgebremst.

Die Oberfläche der strömungstechnischen Komponenten 2, 3 ist vorteilhafterweise rotationssymmetrisch ausgebildet.

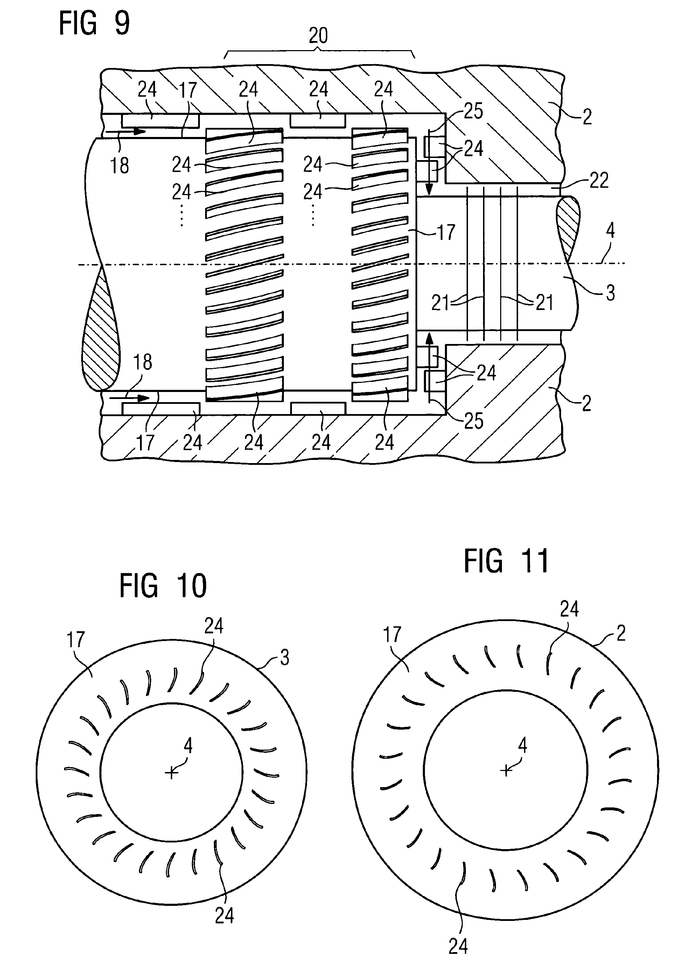

In der Figur 8 ist eine alternative Ausführungsform der Dichtungsanordnung 20 dargestellt. Die Dichtungsanordnung 20 in Figur 7, wie auch in Figur 8 und in Figur 9 ist Teil einer Strömungsmaschine. In der Figur 8 sind die Dichtschaufeln 24 in Leckageströmungsrichtung 18 gesehen hintereinander angeordnet. In der Figur 7 sind die Dichtschaufeln 24 in Leckageströmungsrichtung 18 gesehen übereinander angeordnet.

In der Figur 9 ist eine alternative Ausführungsform der Dichtungsanordnung 20 zu sehen. In der Figur 9 sind die Dichtschaufeln 24 in der Leckageströmungsrichtung 18 gesehen hintereinander angeordnet. Die in der Figur 9 gezeigte Dichtungsanordnung 20 hat eine erhöhte Dichtwirkung, da die Dichtungsschaufeln 24 in Leckageströmungsrichtung 18 gesehen zwei Reihen aufweist, die am Innengehäuse 2 fest angeordnet sind und zwei Reihen von Dichtschaufeln 24 aufweist, die fest am Rotor 3 angeordnet sind. Des weiteren wird die Dichtungsanordnung 20 in der Figur 9 derart weitergebildet, dass der Leckagestrom, der sich in Richtung der Leckageströmungsrichtung 18 ausbreitet, der im wesentlichen parallel zur Rotationsachse 4 in axialer Richtung sich bewegt, durch Dichtschaufeln 24 nach einer Umlenkung in radialer Richtung 25 verbessert. Die Dichtungsanordnung 20 gemäß Figur 9 umfasst schließlich gewöhnliche Labyrinthdichtspitzen 21, die nahe an einem Austritt 22 angeordnet sind.

In der Figur 10 ist eine Seitenansicht des Rotors 3 dargestellt. Der Rotor 3 ist um die Rotationsachse 4 symmetrisch ausgebildet. In dieser Ansicht sind die Dichtschaufeln 24 zu sehen, die von der in radialer Richtung 25 strömenden Leckfluid durchströmt werden. Der Übersichtlichkeit wegen sind lediglich zwei Dichtschaufeln 24 mit dem Bezugszeichen 24 versehen. Ebenso ist der Übersichtlichkeit wegen die Dichtschaufel 24 an der Oberfläche 17, die in axialer Richtung 18 der Leckageströmung durchströmt wird, nicht dargestellt.

In der Figur 11 ist das Innengehäuse in einer Seitenansicht dargestellt. Das Innengehäuse 2 ist rotationssymmetrisch zur Rotationsachse 4 ausgebildet und umfasst mehrere Dichtschaufeln 24, die an der Oberfläche 17 angeordnet sind. Diese Dichtschaufeln 24 werden in radialer Richtung 25 von der Leckageströmung durchströmt.

## Patentansprüche

1. Strömungstechnische Komponente (2, 3) mit einem auf einer Oberfläche (17) der strömungstechnischen Komponente (2, 3) angeordneten Dichtungsmittel (19),
wobei im Betrieb der strömungstechnischen Komponente (2, 3) ein Leckfluid entlang der Oberfläche (17) in einer Leckageströmungsrichtung (18) strömt,
**dadurch gekennzeichnet, dass**
das Dichtmittel (19) starr ausgebildete und zur Leckageströmungsrichtung (18) geneigte Dichtschaufeln (24) aufweist.

2. Strömungstechnische Komponente (2, 3) nach Anspruch 1,
**dadurch gekennzeichnet, dass**
die Dichtschaufeln (24) im Wesentlichen senkrecht zur Oberfläche (17) ausgebildet sind.

3. Strömungstechnische Komponente (2, 3) nach Anspruch 1 oder 2,
**dadurch gekennzeichnet, dass**
die Dichtschaufeln (24) gebogen sind.

4. Strömungstechnische Komponente (2, 3) nach einem der Ansprüche 1 bis 3,
**dadurch gekennzeichnet, dass**
die Dichtschaufeln (24) im Wesentlichen parallel zueinander angeordnet sind.

5. Strömungstechnische Komponente (2, 3) nach einem der vorhergehenden Ansprüche,
**dadurch gekennzeichnet, dass**
die Oberfläche (17) rotationssymmetrisch ausgebildet ist.

6. Strömungstechnische Komponente (2, 3) nach Anspruch 5,
**dadurch gekennzeichnet, dass**
die strömungstechnische Komponente (2, 3) als Rotor (3) ausgebildet ist.

7. Strömungstechnische Komponente (2, 3) nach Anspruch 5,
**dadurch gekennzeichnet, dass**
die strömungstechnische Komponente (2, 3) als Innengehäuse (2) ausgebildet ist.

8. Strömungsmaschine (1) mit einer strömungstechnischen Komponente (2, 3) nach einem der Ansprüche 1 bis 8 als Rotor (3) und einer strömungstechnischen Komponente (2, 3) nach einem der Ansprüche 1 bis 8 als Innengehäuse (2).

9. Strömungsmaschine (1) nach Anspruch 9,
wobei die Dichtschaufeln (24) auf dem Rotor (3) und die Dichtschaufeln (24) auf dem Innengehäuse (2) in der Leckageströmungsrichtung (18) hintereinander angeordnet sind.

10. Strömungsmaschine (1) nach Anspruch 9,
wobei die Dichtschaufeln (24) auf dem Rotor (3) gegenüber den Dichtschaufeln (24) auf dem Innengehäuse (2) angeordnet sind.

11. Verfahren zur Herstellung einer strömungstechnischen Komponente (2, 3) mit einer Oberfläche (17) und mit einem Dichtmittel (19), das derart angeordnet wird, dass ein im Betrieb der strömungstechnischen Komponente (2, 3) entlang einer Leckageströmungsrichtung (18) strömendes Leckfluid im wesentlichen senkrecht zum Dichtmittel (19) verläuft,
**dadurch gekennzeichnet, dass**
das Dichtmittel (19) in Form einer Dichtschaufel (24) auf der Oberfläche (17) angeordnet, aus einem starren Material gefertigt und zur Leckageströmungsrichtung (18) im wesentlichen geneigt angeordnet wird.
